# EUROPÄISCHE PATENTSCHRIFT

(11) **EP 1 488 909 B1**
(45) Veröffentlichungstag und Bekanntmachung des Hinweises auf die Patenterteilung: **01.03.2006**
(21) Anmeldenummer: 03021872.1
(22) Anmeldetag: 27.09.2003
(51) Int. Cl.: B29C 47/90, B29C 47/88, B29C 47/00

(54) **Abzugsvorrichtung einer Schlauchfolienextrusionsanlage und Verfahren zur Herstellung einer Schlauchfolienbahn aus Kunststoff**
Take-off apparatus for tubular plastic film extrusion unit and method of manufacturing a tubular plastic film
Dispositif de tirage pour une unité d'extrusion de films tubulaires en matière plastique et procédé de fabrication d'un film tubulaire en matière plastique

(30) Priorität: 17.06.2003 DE 20309429 U
(43) Veröffentlichungstag der Anmeldung: 22.12.2004
(73) Patentinhaber: Reifenhäuser GmbH & Co. Maschinenfabrik, 53839 Troisdorf (DE)
(72) Erfinder: Meyer, Helmut, 53842 Troisdorf (DE)
(74) Vertreter: Müller-Gerbes, Margot

(56) Entgegenhaltungen:
- US-A- 3 097 971
- US-A- 4 176 775
- US-A- 5 423 468
- US-A- 5 979 731
- US-B1- 6 398 534

## Beschreibung

Die Erfindung betrifft eine Abzugsvorrichtung einer Schlauchfolienextrusionsanlage zur Herstellung von Schlauchfolienbahnen aus Kunststoff, wobei die Abzugsvorrichtung mindestens eine Wendestange für die Schlauchfolienbahn aufweist und die Wendestange ein Trägerrohr mit einem hohlen Innenraum und mit einer Mantelfläche umfaßt, entlang derer die Schlauchfolienbahn in einem Umschlingungswinkel um die Mantelfläche führbar ist, und wobei der Innenraum der Wendestange an eine Druckluftquelle anschließbar ist und zumindest im der Schlauchfolienbahn zugewandten Bereich die Mantelfläche durchsetzende Luftaustrittsöffnungen vorgesehen sind, die mit dem Innenraum kommunizieren.

Die Extrusion von Schlauchfolienbahnen aus Kunststoff mittels Schlauchfolienextrusionsanlagen ist vielfältig bekannt. Da bei den bekannten Verfahren unvermeidlich Dickentoleranzen der hergestellten Schlauchfolienbahn auftreten, addieren sich diese auf der zu einem Coil aufgewickelten Schlauchfolienbahn und rufen nachfolgend Probleme bei der weiteren Verarbeitung hervor, weshalb dieser Addition durch geeignete Gegenmaßnahmen entgegengewirkt wird.

Eine solche und beispielsweise aus der DE 21 56 079 C2 bekannte Maßnahme besteht darin, als Abzugsvorrichtung der Schlauchfolienextrusionsanlage einen so genannten Wendestangenabzug vorzusehen, der über mindestens eine Wendestange verfügt, die z. B. reversierend in einer rechtwinklig zur Extrusionsrichtung liegenden Ebene geführt wird und die Lage der einzelnen Dickenfehler der extrudierten Schlauchfolienbahn über deren gesamte Breite kontinuierlich verteilt.

Da die Schlauchfolienbahn bei einem Wendestangenabzug notwendigerweise aufgrund der Reversierbewegung desselben schräg, d. h. abweichend von einem Winkel von 90° zur Längsachse der Wendestange über deren Mantelfläche geführt wird, sind die Wendestangen der bekannten Abzugsvorrichtungen feststehend, d. h. nicht rotierend im Abzug gelagert, was wiederum beträchtliche Reibung zwischen der über die Mantelfläche geführten Schlauchfolienbahn und der feststehenden Wendestange hervorruft.

Es sind daher bereits verschiedentlich Versuche unternommen worden, diese Reibung zwischen der Wendestange und der darüber geführten Schlauchfolienbahn zu verringern.

Eine gattungsgemäße Abzugsvorrichtung mit Wendestangen, bei welcher der Innenraum der Wendestange an eine Druckluftquelle anschließbar ist und Luftaustrittsöffnungen in der Mantelfläche zumindest in dem der Schlauchfolienbahn zugewandten Bereich vorgesehen sind, die mit dem Innenraum kommunizieren, ist aus der DE 199 12 209 A1 bekannt. Die über die Luftaustrittsöffnungen austretenden Luftmassen rufen zwischen der über die Mantelfläche geführten Schlauchfolienbahn und der Wendestange ein Luftpolster hervor, so daß die Schlauchfolienbahn im Idealfall berührungslos über die Mantelfläche gleitet und somit die ansonsten zwangsläufig entstehenden Reibungskräfte ausgeschaltet sind.

Auch die US-B1- 6 398 534 beschreibt eine solche gattungsgemäße Wendestange, bei der Luftaustrittsöffnungen in der Mantelfläche vorgesehen sind, um eine berührungslose Führung der Folienbahn zu gewährleisten. Auch bei dieser bekannten Wendestange ist das erzeugte Luftpolster jedoch turbulent und ruft insbesondere bei empfindlichen und/oder stark klebenden Folien Probleme hervor.

Problematisch bei den bisher eingesetzten luftbeaufschlagten Wendestangen ist es, daß die Luftströme aus den Luftaustrittsöffnungen mit hohem Druck und hoher Luftgeschwindigkeit austreten müssen, um über die gesamte Oberfläche der Wendestange ein gleichmäßiges Luftpolster auszubilden. Da notwendigerweise zwischen den einzelnen Luftaustrittsöffnungen noch lochfreie Bereiche der Mantelfläche der Wendestange verbleiben müssen, um deren Stabilität sicherzustellen, müssen somit die lochfreien Bereiche ebenfalls mit Luft aus den benachbarten Luftaustrittsöffnungen versorgt werden, um ein möglichst gleichmäßiges Luftpolster zu erzielen. Dieses Problem konnte in der Praxis bislang nicht zufriedenstellend gelöst werden, vielmehr konnten vereinzelte Kontakte zwischen der Schlauchfolienbahn und der Oberfläche der Wendestange bislang nicht vermieden werden. Aus diesem Grunde war z. B. die Herstellung von Schlauchfolienbahnen mit hoher Adhäsionskraft unter Verwendung von Wendestangenabzugsvorrichtungen bislang nicht möglich.

Aus der EP 1 144 292 B1 ist darüber hinaus eine Breitstreckvorrichtung bekannt, mit der eine Verstreckung einer Materialbahn in Breitenrichtung durch einen bombierten Zylinder hervorgerufen wird. Der Zylinder weist zur schwebenden Führung der Materialbahn eine gasdurchlässige Wand aus einem metallhaltigen Werkstoff mit offenen Poren auf, die einen mittleren Durchmesser von weniger als 20 µm aufweisen und mit einem gasförmigen Fluid beaufschlagt wird.

Die US-A-5 423 468 beschreibt eine Führungs- bzw. Umlenkwalze für ein bewegtes Substrat, bei der ein umfänglicher Austritt eines Stützluftstromes durch eine oberflächlich auf die Walze aufgebrachte Schicht aus einem porösen Material hindurch erfolgt.

Die Erfindung hat sich die Aufgabe gestellt, eine Abzugsvorrichtung einer Schlauchfolienextrusionsanlage der eingangs genannten Art dahingehend weiterzubilden, daß sie eine gleichmäßige und zuverlässig berührungslose Führung der Schlauchfolienbahn gewährleistet.

Zur Lösung der gestellten Aufgabe wird erfindungsgemäß vorgeschlagen, daß die Mantelfläche der Wendestange von einer auf das Trägerrohr aufgebrachten luftdurchlässigen mikroporösen Schicht mit einer mittleren Porengröße von 5 bis 100 µm ausgebildet ist und der der Schlauchfolienbahn zugewandte Bereich, in welchem die Luftaustrittsöffnungen im Trägerrohr ausgebildet sind, von einem Winkel β umschlossen ist, der gegenüber dem Umschlingungswinkel α zu beiden Seiten desselben um Winkel γ von jeweils 2° bis 8° vergrößert ist.

Mit anderen Worten wird die Schlauchfolienbahn in einem Umschlingungswinkel um den Umfang der Wendestange geführt, wobei der Zulaufbereich, in welchem die Folienbahn tangential an den Umfang der Wendestange angenähert wird und der Ablaufbereich, in welchem die Schlauchfolienbahn tangential vom Umfang der Wendestange abgeführt wird, den Umschlingungswinkel begrenzen. Im Rahmen der Erfindung wurde herausgefunden, daß bei einer Begrenzung der Luftaustrittsöffnungen innerhalb des Trägerrohres auf den vom Umschlingungswinkel der Schlauchfolienbahn eingeschlossenen Bereich eine Berührung der Schlauchfolienbahn mit der Oberfläche der Wendestange insbesondere im Auf- und Ablaufbereich derselben an bzw. von der Oberfläche der Wendestange nicht immer zuverlässig vermieden werden kann. Vielmehr ist es vorteilhaft, wenn der Bereich, in welchem die Luftaustrittsöffnungen im Trägerrohr angeordnet sind und in welchem infolgedessen auch das Luftpolster um die Mantelfläche der Wendestange ausgebildet wird, gegenüber dem Umschlingungswinkel zu beiden Seiten desselben um Winkel von jeweils 2° bis 8° vergrößert ist. Bei einer bevorzugten Ausführungsform beträgt beispielsweise der Umschlingungswinkel der Schlauchfolienbahn um die Wendestange 180°, wobei der demgegenüber vergrößerte Bereich, in welchem die Luftaustrittsöffnungen im Trägerrohr der Wendestange angeordnet sind, etwa einen Winkel von 190° umfaßt, wobei die Vergrößerung um 10° gegenüber dem Umschlingungswinkel zu gleichen Teilen im Auf- und Ablaufbereich der Schlauchfolienbahn angeordnet ist.

Es hat sich im Rahmen der Erfindung ferner gezeigt, daß die die Mantelfläche der Wendestange ausbildende mikroporöse luftdurchlässige Schicht den der Wendestange in deren Innenraum zugeführten Druckluftstrom derart fein verteilt durch die Vielzahl kleinster und eng aneinander anliegender Mikroporen an der Oberfläche der Wendestange austreten läßt, daß sich ein außer-ordentlich gleichmäßiges und konstantes Luftpolster ausbildet, über welches Schlauchfolienbahnen zuverlässig berührungslos geführt werden können, selbst wenn die Schlauchfolienbahnen eine hohe Klebneigung und hohe Adhäsionskräfte entwickeln.

Die zur Ausbildung der Mantelfläche verwendete mikroporöse Schicht weist vorteilhaft eine Dicke von 0,5 bis 2,0 mm auf, da bei diesen Schichtdicken die gewünschte Feinverteilung des Luftstromes bei gleichzeitiger Luftdurchlässigkeit der mikroporösen Schicht gewährleistet ist.

Vorteilhaft weist die erfindungsgemäße Wendestange bei Beaufschlagung mit Druckluft von 0,5 bis 4 bar einen Luftdurchsatz von 0,2 l/min dm² bei 0,5 bar bis etwa 1,6 l/min dm² bei 4 bar auf. Die Beaufschlagung mit Druckluft eines solchen Druckes von 0,5 bis 4 bar ist bedeutend niedriger, als es bei den bisher bekannten Wendestangen mit beispielsweise in die Mantelfläche gebohrten Luftaustrittsöffnungen der Fall ist, und auch der Luftdurchsatz bzw. Luftverbrauch ist bedeutend geringer. Dies führt nicht nur zu einer erheblichen Verringerung des benötigten Luftvolumens bei der erfindungsgemäßen Wendestange, sondern demgemäß können auch die benötigten Gebläse oder sonstigen Druckluftquellen kleiner dimensioniert werden, der Energieverbrauch wird verringert und auch die Geräuschentwicklung bei Einsatz der erfindungsgemäßen Wendestangen erheblich reduziert.

Die Herstellung von mikroporösen Schichten mit einer erfindungsgemäß geforderten mittleren Porengröße von etwa 5 bis 100 µm, die auf dem Trägerrohr zur Ausbildung der Mantelfläche aufgebracht werden, kann auf unterschiedliche Weise bewirkt werden. Beispielsweise kann die mikroporöse Schicht auf Basis eines Pulvergemisches mit mehreren Komponenten unterschiedlicher Schmelztemperaturen hergestellt werden.

Insbesondere kann die mikroporöse Schicht auf Basis von Metall- und Keramikkomponenten hergestellt werden.

In einer besonders vorteilhaften Ausführungsform der Erfindung ist zusätzlich vorgesehen, daß in den gegenüber dem Umschlingungswinkel der Schlauchfolienbahn vergrößerten Bereichen der Mantelfläche, in welchen die Luftaustrittsöffnungen angeordnet sind, die mikroporöse Schicht gegenüber den übrigen Bereichen der Wendestange eine erhöhte Luftdurchlässigkeit aufweist, so daß in diesen Bereichen ein stärkeres Anblasen der Schlauchfolienbahn und ein kräftigeres Luftpolster ausgebildet werden kann, um unbeabsichtigtes Anhaften der Schlauchfolienbahn an der Oberfläche der Wendestange in diesen Bereichen zu verhindern. Hierdurch wird dem Umstand Rechnung getragen, daß in diesen vergrößerten Bereichen gegenüber dem Umschlingungswinkel die Schlauchfolienbahn noch nicht vollflächig die Oberfläche der Wendestange einhüllt, so daß an sich zur Ausbildung des Luftpolsters benötigte Luft ungehindert entweichen kann. Diese entweichende Luft wird durch die vergrößerte Porosität der auf die Wendestange aufgebrachten luftdurchlässigen mikroporösen Schicht in diesen Bereichen ausgeglichen. So kann beispielsweise die Porosität der mikroporösen Schicht in diesen Bereichen gegenüber den übrigen Bereichen der Wendestange bis zu verdoppelt werden, indem beispielsweise die mittlere Porengröße entsprechend verdoppelt wird. Dies kann durch eine veränderte Rezeptur des die mikroporöse Schicht ausbildenden Materials bei der Herstellung der erfindungsgemäßen Wendestange in diesen Bereichen bewirkt werden.

Es werden demzufolge in Längsachsenrichtung der Wendestange verlaufende streifenförmige Bereiche erhöhter Porosität auf dem Umfang der Wendestange ausgebildet, die dem Auf- bzw. Ablaufbereich der umschlingend um die Wendestange geführten Schlauchfolienbahn zugeordnet sind.

Das Verfahren zur Herstellung einer Schlauchfolienbahn aus Kunststoff beruht darauf, daß die Schlauchfolienbahn aus einem von mindestens einem Extruder gespeisten Folienblaskopf austritt und mittels Blasluft schlauchförmig aufgeblasen und nachfolgend von einem Wendestangenabzug mit mindestens einer Wendestange unter teilweiser Umschlingung der Mantelfläche in einem Umschlingungswinkel derselben abgezogen wird. Die Wendestange wird mit Druckluft beaufschlagt, welche über in der Mantelfläche der Wendestange angeordnete Luftaustrittsöffnungen in Richtung auf die Schlauchfolienbahn austritt, so daß ein Luftpolster zwischen Wendestange und Schlauchfolienbahn zur berührungslosen Führung derselben über die Mantelfläche der Wendestange ausgebildet wird.

Erfindungsgemäß wird vorgeschlagen, daß die Druckluft als laminarer Luftstrom aus der Mantelfläche austritt und ein laminares Luftpolster für die Schlauchfolienbahn ausbildet und das Luftpolster zwischen Schlauchfolienbahn und Wendestange in einem von einem Winkel β eingeschlossenen Bereich des Umfanges der Wendestange erzeugt wird, der gegenüber dem Umschlingungswinkel α beidseits desselben um Winkel γ von jeweils 2° bis 8° vergrößert ist.

Dem solchermaßen ausgebildeten Verfahren liegt die Erkenntnis zugrunde, daß bei den bisher eingesetzten Wendestangen mit beispielsweise in definierten Abständen voneinander angeordneten und durch Bohrungen in der Mantelfläche der Wendestange erstellten Luftaustrittsöffnungen die austretende Luft infolge der für die Ausbildung des Luftpolsters erforderlichen hohen Luftgeschwindigkeit und hohen Massendurchsätze stets in Form turbulenter Luftströme austritt, welche ein inhomogenes Luftpolster um die Wendestange entstehen lassen, so daß Berührungen zwischen der Schlauchfolienbahn und der Wendestange nicht immer ausgeschlossen werden können.

Bei der erfindungsgemäß vorgesehenen Ausbildung eines laminaren Luftpolsters infolge des laminaren Austritts des Luftstromes aus der Mantelfläche wird dieses Problem vollständig überwunden.

Insbesondere ist erfindungsgemäß vorgesehen, daß der Luftstrom durch eine die Mantelfläche der Wendestange ausbildende mikroporöse und luftdurchlässige Schicht geführt wird, mittels derer der Luftstrom in eine Vielzahl laminarer Teilluftströme aufgeteilt wird und die laminaren Teilluftströme jeweils durch die einzelnen Poren in der Mantelfläche der Wendestange austreten und ein laminares Luftpolster um diese ausbilden.

Auf diese Weise kann mit dem erfindungsgemäßen Verfahren insbesondere eine Schlauchfolienbahn hoher Adhäsionswirkung auf Basis von z. B. EVA-Verbunden, PIB-Verbunden, Verbunden mit lonomeren in PE-LLD-Folien hergestellt werden.

Erfindungsgemäß wird die Schlauchfolienbahn in einem Umschlingungswinkel von bevorzugt 170 bis 190° um die Wendestange geführt und das Luftpolster zwischen Schlauchfolienbahn und Wendestange wird in einem von einem Winkel eingeschlossenen Bereich des Umfanges der Wendestange erzeugt, der gegenüber dem Umschlingungswinkel beidseits desselben um jeweils 2° bis 8° vergrößert ist. Der Umschlingungswinkel der Schlauchfolienbahn selbst, mit welchem diese umschlingend um die Oberfläche der Wendestange geführt wird, beträgt bevorzugt 170° bis 190°, insbesondere 180°.

In den um jeweils 2° bis 8° vergrößerten Bereichen gegenüber dem Umschlingungswinkel der Schlauchfolienbahn wird bevorzugt ein laminares Luftpolster mit größerem Luftdurchsatz durch die Mantelfläche der Wendestange erzeugt als im Bereich des Umschlingungswinkels, so daß hier ein stärkeres Anblasen und eine stärkere Stützung der Schlauchfolienbahn erfolgt.

Weitere Einzelheiten und Ausgestaltungen der Erfindung werden nachfolgend anhand eines Ausführungsbeispiels in der Zeichnung näher erläutert. Es zeigen:
- Figur 1: in stark schematisierter Darstellung einen Schnitt durch eine erfindungsgemäße Wendestange,
- Figur 2: eine mikroskopische Aufnahme der Mantelfläche der Wendestange gemäß Pfeil V in Figur 1,
- Figur 3: eine Rasterelektronenmikroskopaufnahme der mikroporösen Schicht auf der Wendestange,
- Figur 4: in perspektivischer Darstellung die von einer Schlauchfolienbahn umschlungene Wendestange,
- Figur 5: die Seitenansicht der Wendestange gemäß Figur 4.

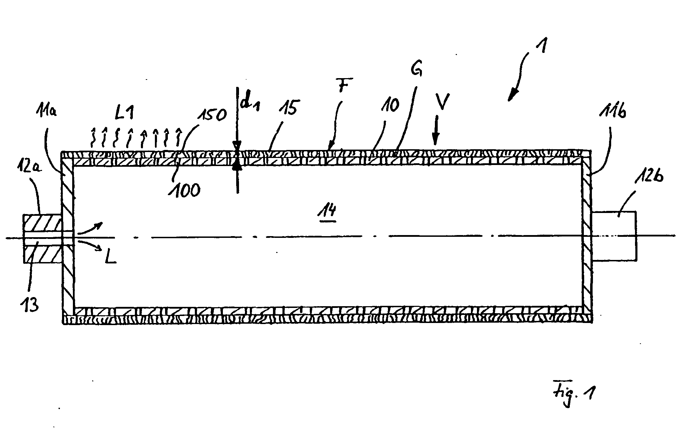

Die in der Figur 1 dargestellte Wendestange 1 ist für den Einsatz in einer Abzugsvorrichtung einer Schlauchfolienextrusionsanlage zur Herstellung von Schlauchfolienbahnen aus Kunststoff vorgesehen. In an sich bekannter und beispielsweise in der DE 199 12 209 A1 beschriebener Weise wird die Schlauchfolienbahn umschlingend um die Mantelfläche F der Wendestange 1 geführt.

Die Wendestange 1 umfaßt ein Trägerrohr 10 aus einem formstabilen, beispielsweise metallischen Werkstoff, in dessen Umfangsfläche zumindest in dem der Schlauchfolienbahn zugewandten Bereich Perforationen 100, z. B. regelmäßig eingebrachte Bohrungen, ausgebildet sind. Das Trägerrohr 10 umgibt einen hohlen Innenraum 14 der Wendestange 1.

Die beiden stirnseitigen Enden des Trägerrohres 10 sind mittels Stirnplatten 11a, 11b verschlossen, an welche sich außenseitig die jeweiligen Lagerzapfen 12a, 12b für die Befestigung der Wendestange 1 in der Abzugsvorrichtung anschließen. Da die Schlauchfolienbahn unter verschiedenen Winkeln über die Mantelfläche F der Wendestange 1 geführt wird, werden derartige Wendestangen 1 üblicherweise ortsfest, d. h. nicht rotierend, in der Abzugsvorrichtung befestigt.

Durch den Lagerzapfen 12a hindurch ist ein Lufteintrittskanal 13 verlaufend angeordnet, der auch durch die anschließende Stimplatte 11a hindurch in den hohlen Innenraum 14 der Wendestange 1 einmündet. Eine an diesen Lufteintrittskanal 13 angeschlossenen Druckluftquelle, z. B. ein Gebläse, kann von daher einen Luftstrom gemäß Pfeilen L in den Innenraum 14 der Wendestange 1 fördern. Dieser Luftstrom kann sodann über die Perforationen 100 in der Umfangsfläche des Trägerrohres 10 nach außen in Richtung auf die zu führende Schlauchfolienbahn ausströmen.

Wesentliches Merkmal der in der Figur 1 dargestellten Wendestange 1 ist es, daß die der Führung der Schlauchfolienbahn dienende Mantelfläche F von einer außenseitig auf das perforierte Trägerrohr 100 aufgebrachten mikroporösen Schicht 15 gebildet wird.

Diese mikroporöse Schicht 15 weist beispielsweise eine Dicke von 0,5 bis 2,0 mm auf und ist auf Basis eines Pulvergemisches mit mehreren Komponenten unterschiedlicher Schmelztemperaturen, z. B. auf Basis von Metall- und Keramikkomponenten hergestellt.

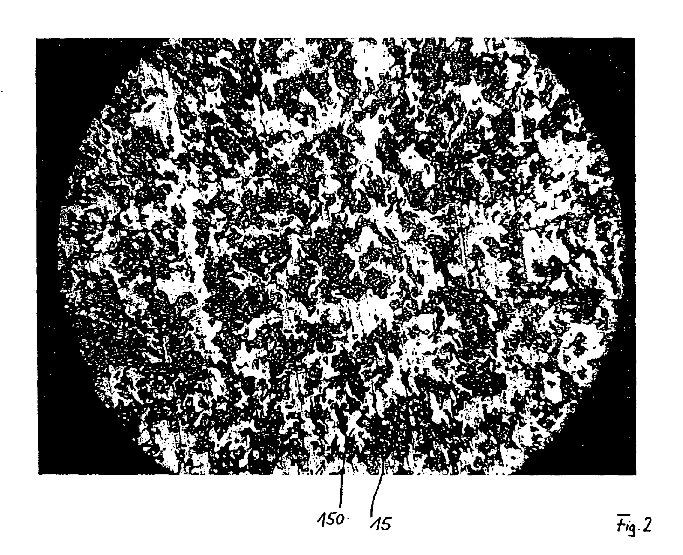

Die mikroporöse Schicht 15 zeichnet sich dadurch aus, daß sie, wie auch aus der Mikroskopdarstellung gemäß Figur 2 ersichtlich, von einer Vielzahl kleinster Haarrisse durchzogen ist, die luftdurchlässige Poren 150 einer Porengröße von etwa 5 bis 100 µm in der mikroporösen Schicht 15 ausbilden. In der Darstellung gemäß Figur 2 erkennt man neben den dunklen und mit Bezugsziffer 15 gekennzeichneten Bereichen, die luftundurchlässig sind, eng aneinander angrenzende unregelmäßige und hell eingefärbte Mikroporen, die mit Bezugsziffer 150 gekennzeichnet sind. Die Darstellung gemäß Figur 2 wurde durch ein Mikroskop mit 100-facher Vergrößerung erstellt.

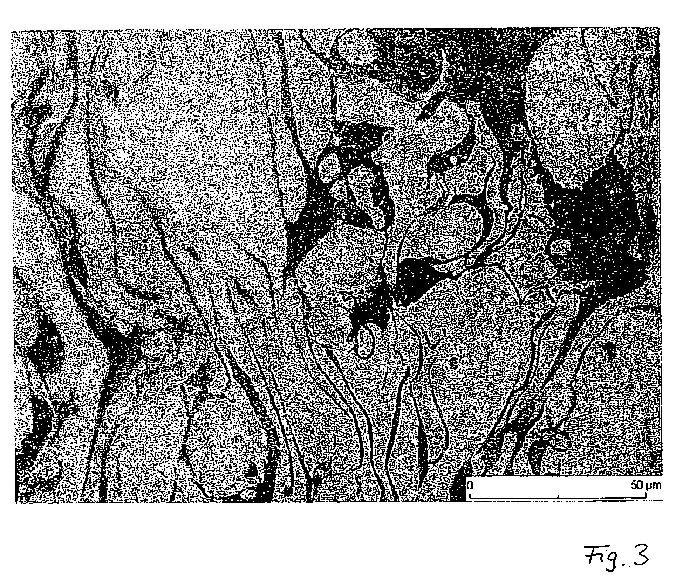

Aus dem Schliffbild mittels eines Rasterelektronenmikroskops (REM) in Figur 3 sind ebenfalls die unregelmäßigen und dunkel eingefärbten Poren von etwa 5 bis 100 µm in dem demgegenüber helleren Metallsubstrat der mikroporösen Schicht ersichtlich.

Wie auch aus der schematisierten Darstellung in der Figur 1 ersichtlich, tritt somit der über den Lufteintrittskanal 13 von einem Gebläse in den Innenraum 14 der Wendestange 1 geförderte Luftstrom L durch die Poren 100 des Trägerrohres 10 hindurch in die Grenzschicht G zwischen der außenseitigen Oberfläche des Trägerrohres 10 und der darauf aufgebrachten mikroporösen Schicht 15 und wird von dort über die einzelnen unregelmäßigen und eng aneinander angrenzenden Mikroporen 150 hindurch an die Mantelfläche F der Wendestange 1 geführt, welche zugleich die Außenoberfläche der mikroporösen Schicht 15 darstellt. Aus diesen Poren 150 tritt sodann der Luftstrom in Form feinster Mikroluftströme L1 aus, wobei diese Mikroluftströme L1 aufgrund der geringen Porengröße von nur 5 bis 100 µm der Poren 150 mit geringer Geschwindigkeit als laminare Luftströme L1 austreten und somit insgesamt an der Mantelfläche F der Wendestange 1 ein laminares Luftpolster für die berührungslose Führung der Schlauchfolienbahn erzeugen.

Mit anderen Worten dient die außenseitig auf das perforierte Trägerrohr 10 aufgebrachte mikroporöse Schicht 15 dazu, den über die Perforationen 100 mit hoher Geschwindigkeit herangeführten Luftstrom L in eine Vielzahl laminarer kleinster Luftströme L1 aufzuteilen und aus den einzelnen fein verteilten Poren mit einer mittleren Porengröße von 5 bis 100 µm austreten zu lassen, so daß im Ergebnis ein laminares Luftpolster um die Mantelfläche F der Wendestange 1 erreicht wird.

Der Arbeitsbereich für den zugeführten Luftstrom L einer solchen Wendestange liegt abhängig vom gefahrenen Produkt, d. h. der produzierten Schlauchfolienbahn bei etwa 0,5 bis 4 bar. Wenn die Wendestange mit einem Luftstrom L eines Überdruckes von 0,5 bar beaufschlagt wird, resultiert daraus ein Luftverbrauch von etwa 0,2 l/min dm², d. h. diese Luftmenge tritt in Form kleinster Luftströme L1 aus der Wendestange 1 aus. Bei Beaufschlagung mit einem Luftstrom L von 4 bar Überdruck beträgt der Luftverbrauch entsprechend etwa 1,6 l/min dm².

Derartige Wendestangen 1 können zur Führung auch stark klebender Schlauchfolienbahnen, z. B. EVA-Verbundfolien, PIB-Verbundfolien und Verbunden mit Ionomeren in PE-LLD-Folien verwendet werden, ohne daß es zu einem Anhaften an der Wendestange 1 kommt.

Beispielsweise können z. B. Oberflächenschutzfolien aus coextrudierten EVA-Verbunden mit hohem VA-Anteil, Streckfolie aus coextrudierten LLDPE-Verbunden mit PIB oder Metallocene-Verbunde und High Quality Folien absolut kratzerfrei und mit sehr hohen optischen Anforderungen mittels der vorangehend beschriebenen Abzugsvorrichtung produziert werden.

Da die erfindungsgemäß vorgeschlagene mikroporöse Schicht bevorzugt auf Basis von Metall- und Keramikkomponenten hergestellt wird, kann sie mit bekannten Verfahren auf einfache Weise auf der zuvor vorgefertigten Wendestange, bestehend aus Lagerzapfen 12a, 12b, Stirnplatten 11a, 11b und Trägerrohr 10 abgelagert werden und nachfolgend z. B. durch Schleifen oder Überdrehen in die gewünschte Form gebracht werden.

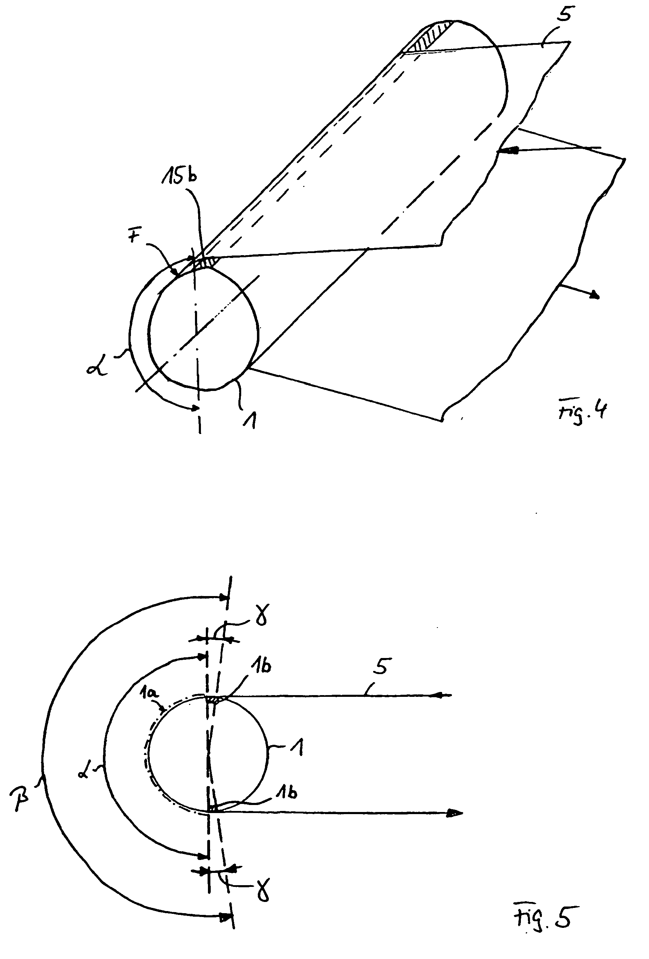

Eine besonders hohe Betriebssicherheit der vorangehend erläuterten Wendestange 1 wird durch den aus den Figuren 4 und 5 ersichtlichen Aufbau erzielt.

Man erkennt in der Figur 4 die Wendestange 1, welche der Umlenkung einer in einer Abzugsvorrichtung zugeführten Schlauchfolienbahn 5 in an sich bekannter Arbeitsweise eines Wendestangenabzuges dient. Die Schlauchfolienbahn 5 ist hierbei, wie insbesondere auch aus der Darstellung in Figur 5 ersichtlich, in einem Umschlingungswinkel α um die Mantelfläche F der Wendestange 1 geführt, wobei in diesem mit Bezugsziffer 1a bezeichneten Bereich auch die aus der Figur 1 ersichtlichen Luftaustrittsöffnungen 100 im Trägerrohr 10 ausgebildet sind, so daß die vollflächig um den Umfang der Wendestange 1 zur Ausbildung der Mantelfläche F aufgebrachte mikroporöse Schicht 15 in diesem Bereich 1a die Ausbildung des gewünschten laminaren Luftpolsters zwischen Schlauchfolienbahn 5 und der Mantelfläche F der Wendestange 1 ermöglicht.

Die Luftaustrittsöffnungen 100 im Trägerrohr 10 der Wendestange 1 und demzufolge der Bereich, in welchem das Luftpolster entlang der Mantelfläche F der Wendestange 1 ausgebildet wird, ist jedoch nicht auf den vom Umschlingungswinkel α begrenzten Bereich der Mantelfläche F eingeschränkt, sondern ist in einem gegenüber dem Umschlingungswinkel α vergrößerten Bereich angeordnet, der von einem Winkel β eingeschlossen wird. Wie aus der Darstellung in Figur 5 ersichtlich, ist dieser Winkel β zu beiden Seiten des Umschlingungswinkels α um je gleich große Winkel γ vergrößert, die bevorzugt jeweils 2° bis 8° betragen. Mit anderen Worten ist beim Ausführungsbeispiel gemäß Figur 5 ein Umschlingungswinkel α der Schlauchfolienbahn 5 um die Wendestange 1 von 180° gewählt, wohingegen der Winkel β etwa 190° und die Winkel γ dementsprechend jeweils etwa 5° betragen.

In diesen von den Winkeln γ eingeschlossenen Bereichen ist der sogenannte Auf- bzw. Ablaufbereich der Schlauchfolienbahn 5 zur Wendestange 1 bzw. von dieser weg ausgebildet, in welchem die Schlauchfolienbahn 5 tangential an die Oberfläche der Wendestange 1 herangeführt bzw. von dieser abgeführt wird.

In diesen in der Figur 5 mit Bezugsziffer 1b gekennzeichneten Bereichen, die dem Zu- bzw. Ablaufbereich der Schlauchfolienbahn 5 entsprechen, ist die mikroporöse luftdurchlässige Schicht 15 auf der Mantelfläche F der Wendestange 1 in Form von Streifen einer solchen mikroporösen Schicht 15b ausgebildet, die gegenüber der mikroporösen luftdurchlässigen Schicht 15 eine gesteigerte Luftdurchlässigkeit beispielsweise infolge vergrößerter Porosität aufweist. Es werden demzufolge in Richtung der Längsachse M der Wendestange 1 verlaufende streifenförmige Bereiche ausgebildet, in welchen die mikroporöse Schicht 15b mit erhöhter Luftdurchlässigkeit angeordnet ist, die vom Umfangswinkel γ begrenzt werden. Infolge dieser gesteigerten Luftdurchlässigkeit der mikroporösen Schicht 15b wird die Schlauchfolienbahn in diesen Bereichen verstärkt angeblasen und ein dementsprechend stärkeres Luftpolster erzeugt, um versehentliches Anhaften der Schlauchfolienbahn 5 in diesen Auf- und Ablaufbereichen der Wendestange 1 zu vermeiden. Auf diese Weise werden im Auf- und Ablaufbereich Luftverluste infolge der den Umfang der Wendestange 1 noch nicht einhüllenden Schlauchfolienbahn 5 ausgeglichen. Die solchermaßen ausgebildete Wendestange 1 erreicht somit eine wesentlich verbesserte Betriebssicherheit und gewährleistet auch bei stark haftenden und klebenden Folien eine zuverlässige berührungslose und damit markierungsfreie Führung um die Wendestange 1.

Die vorangehend beschriebene Wendestange ist vorrangig für die angegebene Verwendung innerhalb eines sogenannten Wendestangenabzuges einer Schlauchfolienextrusionsanlage vorgesehen. Es versteht sich jedoch für den Fachmann, daß eine solchermaßen ausgebildete Stange oder Walze auch für andere Anwendungen geeignet ist, bei denen eine möglichst berührungslose Führung und/oder Umlenkung eines bahnförmigen Kunststofferzeugnisses erzielt werden soll. Beispielhaft seien hierzu Führungs- und Umlenkwalzen in Chill-Roll-Folienextrusionsanlagen sowie in Extrusionsanlagen zur Herstellung von Spinnvlies- oder Meltblown-Vliesbahnen etc. genannt.

## Patentansprüche

1. Abzugsvorrichtung einer Schlauchfolienextrusionsanlage zur Herstellung von Schlauchfolienbahnen (5) aus Kunststoff, wobei die Abzugsvorrichtung mindestens eine Wendestange (1) für die Schlauchfolienbahn (5) aufweist und die Wendestange (1) ein Trägerrohr (10) mit einem hohlen Innenraum (14) und mit einer Mantelfläche (F) umfaßt, entlang derer die Schlauchfolienbahn in einem Umschlingungswinkel (α) um die Mantelfläche (F) führbar ist, und wobei der Innenraum (14) der Wendestange (1) an eine Druckluftquelle anschließbar ist und zumindest in dem der Schlauchfolienbahn (5) zugewandten Bereich (1a) der Mantelfläche (F) diese durchsetzende Luftaustrittsöffnungen (100) vorgesehen sind, die mit dem Innenraum (14) kommunizieren, **dadurch gekennzeichnet, daß** die Mantelfläche (F) von einer auf das Trägerrohr (10) aufgebrachten luftdurchlässigen mikroporösen Schicht (15) mit einer mittleren Porengröße von 5 bis 100 µm ausgebildet ist und der der Schlauchfolienbahn (5) zugewandte Bereich (1a), in welchem die Luftaustrittsöffnungen (100) im Trägerrohr (10) ausgebildet sind, von einem Winkel (β) umschlossen ist, der gegenüber dem Umschlingungswinkel (α) zu beiden Seiten desselben um Winkel (γ) von jeweils 2° bis 8° vergrößert ist.

2. Abzugsvorrichtung nach Anspruch 1, **dadurch gekennzeichnet, daß** die mikroporöse Schicht (15) der Wendestange (1) eine Dicke (d1) von 0,5 bis 2,0 mm aufweist.

3. Abzugsvorrichtung nach einem der Ansprüche 1 oder 2, **dadurch gekennzeichnet, daß** die Wendestange (1) bei Beaufschlagung mit Druckluft von 0,5 bis 4 bar einen Luftdurchsatz von entsprechend 0,2 l/min dm² bei 0,5 bar bis 1,6 l/min dm² bei 4 bar aufweist.

4. Abzugsvorrichtung nach einem der Ansprüche 1 bis 3, **dadurch gekennzeichnet, daß** die mikroporöse Schicht (15) der Wendestange (1) auf Basis eines Pulvergemisches mit mehreren Komponenten unterschiedlicher Schmelztemperaturen hergestellt ist.

5. Abzugsvorrichtung nach Anspruch 4, **dadurch gekennzeichnet, daß** die mikroporöse Schicht (15) der Wendestange (1) auf Basis von Metall- und Keramikkomponenten hergestellt ist.

6. Abzugsvorrichtung nach einem der Ansprüche 1 bis 5, **dadurch gekennzeichnet, daß** der Umschlingungswinkel (α) 170° bis 190° beträgt.

7. Abzugsvorrichtung nach einem der Ansprüche 1 bis 6, **dadurch gekennzeichnet, daß** die von den Winkeln (γ) eingeschlossenen Bereiche (1b) der Mantelfläche (F) von einer auf das Trägerrohr (10) aufgebrachten luftdurchlässigen mikroporösen Schicht (15a) gebildet sind, die gegenüber der auf die übrigen Bereiche der Mantelfläche (F) aufgebrachten luftdurchlässigen mikroporösen Schicht (15) eine erhöhte Luftdurchlässigkeit aufweist.

8. Verfahren zur Herstellung einer Schlauchfolienbahn (5) aus Kunststoff, bei welchem die Schlauchfolienbahn (5) aus einem von mindestens einem Extruder gespeisten Folienblaskopf austritt und mittels Blasluft schlauchförmig aufgeblasen und nachfolgend von einem Wendestangenabzug mit mindestens einer Wendestange (1) unter teilweiser Umschlingung der Mantelfläche (F) in einem Umschlingungswinkel (α) derselben abgezogen wird, wobei die Wendestange (1) mit Druckluft beaufschlagt wird, welche über in der Mantelfläche (F) der Wendestange (1) ausgebildete Luftaustrittsöffnungen in Richtung auf die Schlauchfolienbahn (5) austritt, dergestalt, daß ein Luftpolster zwischen Wendestange (1) und Schlauchfolienbahn (5) zur berührungslosen Führung der Schlauchfolienbahn (5) über die Wendestange (1) ausgebildet wird, **dadurch gekennzeichnet, daß** die Druckluft als laminarer Luftstrom (L1) aus der Mantelfläche (F) austritt und ein laminares Luftpolster für die Schlauchfolienbahn (5) ausbildet und das Luftpolster zwischen Schlauchfolienbahn (5) und Wendestange (1) in einem von einem Winkel (β) eingeschlossenen Bereich des Umfanges der Wendestange (1) erzeugt wird, der gegenüber dem Umschlingungswinkel (α) beidseits desselben um Winkel (γ) von jeweils 2° bis 8° vergrößert ist.

9. Verfahren nach Anspruch 8, **dadurch gekennzeichnet, daß** der Luftstrom (L) durch Poren (150) einer die Mantelfläche (F) der Wendestange (1) ausbildenden mikroporösen Schicht (15) hindurch in Richtung auf die Schlauchfolienbahn (5) geführt wird und der Luftstrom (L) durch die Poren (150) in eine Vielzahl laminarer Teilluftströme (L1) aufgeteilt wird, die unter Ausbildung des laminaren Luftpolsters aus den Poren (150) austreten.

10. Verfahren nach einem der Ansprüche 8 oder 9, **dadurch gekennzeichnet, daß** der Umschlingungswinkel (α) 170° bis 190° beträgt.

11. Verfahren nach einem der Ansprüche 8 bis 10, **dadurch gekennzeichnet, daß** in den von den Winkeln (γ) eingeschlossenen Bereichen der Wendestange (1) ein laminares Luftpolster mit größerem Luftdurchsatz durch die Mantelfläche (F) der Wendestange (1) erzeugt wird als im Bereich des Umschlingungswinkels (α).

12. Verfahren nach einem der Ansprüche 8 bis 11, **dadurch gekennzeichnet, daß** Schlauchfolienbahnen (5) hoher Adhäsionswirkung auf Basis von EVA-Verbunden, PIB-Verbunden, Verbunden mit lonomeren in PE-LLD-Folien hergestellt werden.

## Claims

1. A take-off unit of a blown film extrusion line for the production of plastic blown film webs (5), the take-off unit having at least one reversing rod (1) for the blown film web (5), and the reversing rod (1) comprising a carrier tube (10) with a hollow interior (14) and with a lateral surface (F), along which the blown film web can be guided in a wrap angle (α) around the lateral surface (F), and it being possible for the interior (14) of the reversing rod (1) to be connected to a compressed-air source, and air outlet openings (100), which are in communication with the interior (14) and pass through the lateral surface (F), being provided at least in the region (1a) of the lateral surface (F) which faces the blown film web (5), **characterized in that** the lateral surface (F) is formed by an air-permeable, microporous layer (15) with a mean pore size of from 5 to 100 µm which has been applied to the carrier tube (10), and the region (1a) which faces the blown film web (5) and in which the air outlet openings (100) are formed in the carrier tube (10) is enclosed by an angle (β) which is larger by angles (γ) of in each case 2° to 8° than the wrap angle (α) on both sides of the latter.

2. A take-off unit according to claim 1, **characterized in that** the microporous layer (15) of the reversing rod (1) has a thickness (d1) of from 0.5 to 2.0 mm.

3. A take-off unit according to either of claims 1 and 2, **characterized in that** the reversing rod (1), when compressed air at from 0.5 to 4 bar is applied to it, has an air throughput of, accordingly, 0.2 l/min dm² at 0.5 bar up to 1.6 l/min dm² at 4 bar.

4. A take-off unit according to any one of claims 1 to 3, **characterized in that** the microporous layer (15) of the reversing rod (1) is produced on the basis of a powder mixture comprising a plurality of components with different melting points.

5. A take-off unit according to claim 4, **characterized in that** the microporous layer (15) of the reversing rod (1) is produced on the basis of metal and ceramic components.

6. A take-off unit according to any one of claims 1 to 5, **characterized in that** the wrap angle (α) is from 170° to 190°.

7. A take-off unit according to any one of claims 1 to 6, **characterized in that** the regions (1b) of the lateral surface (F) which are included by the angles (γ) are formed by an air-permeable, microporous layer (15a) which has been applied to the carrier tube (10) and has an increased air permeability compared to the air-permeable microporous layer (15) which has been applied to the remaining regions of the lateral surface (F).

8. A process for producing a plastic blown film web (5), in which the blown film web (5) emerges from a film-blowing die fed by at least one extruder and is blown into the shape of a tube by means of blowing air, and is then taken off by a reversing rod take-off with at least one reversing rod (1) so as to partially wrap around the lateral surface (F) over a wrap angle (α) of the latter, the reversing rod (1) being acted on by compressed air which emerges towards the blown film web (5) via air outlet openings formed in the lateral surface (F) of the reversing rod (1), in such a manner that an air cushion is formed between reversing rod (1) and blown film web (5) to provide contactless guidance of the blown film web (5) over the reversing rod (1), **characterized in that** the compressed air emerges from the lateral surface (F) as a laminar air stream (L1) and forms a laminar air cushion for the blown film web (5), and the air cushion is produced between the blown film web (5) and reversing rod (1) in a region of the circumference of the reversing rod (1) which is included by an angle (β) that is larger by angles (γ) of in each case 2° to 8° than the wrap angle (α) on both sides of the latter.

9. A process according to claim 8, **characterized in that** the air stream (L) passes through pores (150) of a microporous layer (15) that forms the lateral surface (F) of the reversing rod (1) towards the blown film web (5), and the air stream (L) is divided by the pores (150) into a multiplicity of laminar partial air streams (L1) which emerge from the pores (150) so as to form the laminar air cushion.

10. A process according to either of claims 8 and 9, **characterized in that** the wrap angle (α) is from 170° to 190°.

11. A process according to any one of claims 8 to 10, **characterized in that** a laminar air cushion produced in the regions of the reversing rod (1) which are included by the angles (γ) has a greater throughput of air through the lateral surface (F) of the reversing rod (1) than a laminar air cushion in the region of the wrap angle (α).

12. A process according to any one of claims 8 to 11, **characterized in that** blown film webs (5) with a high adhesion are produced based on EVA composites, PIB composites, composites comprising ionomers in LLDPE films.

## Revendications

1. Dispositif de tirage pour une unité d'extrusion produisant des films tubulaires (5) en matière plastique comportant, pour le film tubulaire (5), au moins une barre de renvoi (1) comprenant un tube porteur (10) entourant un espace interne creux (14) et une enveloppe (F) le long de laquelle le film tubulaire peut passer en entourant l'enveloppe (F) selon un angle d'enveloppement (α), l'espace interne (14) de la barre de renvoi (11) pouvant être relié à une source d'air sous pression et présentant, dans la zone (1a) de l'enveloppe (F) située en face du film tubulaire (5) des ouvertures de sortie d'air (100) qui traversent cette zone en communiquant avec l'espace interne (14), **caractérisé en ce que** l'enveloppe (F) est constituée d'une couche perméable à l'air déposée sur le tube porteur (10), et qui est microporeuse avec des pores d'une grandeur moyenne de 5 à 100 µm, la zone (1a), située en regard du film tubulaire (5) et dans laquelle se trouvent les ouvertures de sortie d'air (100) traversant le tube porteur (10), correspondant à un angle (β) qui dépasse l'angle d'enveloppement (α), de chaque côté d'un angle (γ) allant de 2° à 8°.

2. Dispositif de tirage selon la revendication 1, **caractérisé en ce que** la couche microporeuse (15) de la barre de renvoi (1) présente une épaisseur (d1) de 0,5 à 2,0 mm.

3. Dispositif de tirage selon la revendication 1 ou 2, **caractérisé en ce que** la barre de renvoi (1), quand elle est soumise à l'action d'air comprimé à une pression de 0,5 à 4 bar, laisse passer cet air à un débit qui va de 0,21/min dm² à 0,5 bar, à 1,6 l/min dm² à 4 bar.

4. Dispositif de tirage selon une des revendications 1 à 3, **caractérisé en ce que** la couche microporeuse (15) de la barre de renvoi (1) est fabriquée à base d'un mélange pulvérulent de plusieurs composants présentant des températures de fusion différentes.

5. Dispositif de tirage selon la revendication 4, **caractérisé en ce que** la couche microporeuse (15) de la barre de renvoi (1) est fabriquée à base de composants métalliques et céramiques.

6. Dispositif de tirage selon une des revendications 1 à 5, **caractérisé en ce que** l'angle d'enveloppement (α) va de 170° à 190°.

7. Dispositif de tirage selon une des revendications 1 à 6, **caractérisé en ce que** les zones (1b) de l'enveloppe (F) incluses dans les angles (γ) sont constituées par une couche microporeuse perméable à l'air (15a) qui, par rapport à la couche microporeuse perméable à l'air (15) déposée sur les autres zones de l'enveloppe (F) présente une perméabilité à l'air élevée

8. Procédé de fabrication d'un film tubulaire (5) en matière plastique selon lequel ce film (5) sort d'une tête de soufflage alimentée par au moins une extrudeuse en étant soufflé sous forme tubulaire par de l'air de soufflage, puis est tiré par un dispositif de tirage comprenant au moins une barre de renvoi sur laquelle passe le film le long d'une enveloppe (F) avec un angle d'enveloppement (α), la barre de renvoi étant alimentée par de l'air comprimé qui passe à travers des ouvertures de sortie percées dans l'enveloppe (F) de la barre (1), en direction du film tubulaire (5) de manière à créer un coussin d'air entre la barre de renvoi (1) et le film tubulaire (5) afin de guider sans contact celui-ci par la barre de renvoi (1), **caractérisé en ce que** l'air sous pression sort de l'enveloppe (F) sous la forme d'un courant d'air laminaire (L1), en créant un coussin d'air laminaire pour le film tubulaire (5), ce coussin étant produit entre le film tubulaire (5) et la barre de renvoi (1) dans une zone de la surface périphérique de celle-ci incluant un angle (β) qui, par rapport à l'angle d'enveloppement (α) dépasse celui-ci de chaque côté d'un angle (γ) allant de 2° à 8°.

9. Procédé selon la revendication 8, **caractérisé en ce que** le courant d'air (L) traverse les pores (150) d'une couche microporeuse (15) formant l'enveloppe (F) de la barre de renvoi (1), en direction du film tubulaire (5) en étant divisée par les pores (150) en une pluralité de courants d'air partiels laminaires (L1) qui sortent des pores (150) en formant le coussin d'air laminaire.

10. Procédé selon la revendication 8 ou 9, **caractérisé en ce que** l'angle d'enveloppement (α) est de 170° à 180°.

11. Procédé selon une des revendications 8 à 10, **caractérisé en ce que** dans les zones de la barre de renvoi (1) qui sont incluses dans les angles (γ), est produit un coussin d'air laminaire avec un débit d'air traversant l'enveloppe (F) de la barre de renvoi (1), qui est supérieur au débit d'air dans la zone de l'angle d'enveloppement (α).

12. Procédé selon une des revendications 8 à 11, **caractérisé en ce que** des films tubulaires (5), à haut pouvoir d'adhérence, sont fabriqués sur la base de copolymères éthylène-acétate de vinyle, de composés de polyisobutylène, de composés présentant des ionomères dans des films de polyéthylène LLD.
